**Europäisches Patentamt**

**European Patent Office**

**Office européen des brevets**

(19)

(11) Veröffentlichungsnummer : **0 032 979**
**B1**

# (12) EUROPÄISCHE PATENTSCHRIFT

(45) Veröffentlichungstag der Patentschrift :
**16.11.83**

(21) Anmeldenummer : **80106530.1**

(22) Anmeldetag : **24.10.80**

(51) Int. Cl.³ : **B 60 T 17/02, G 05 D 16/06**

(54) **Druckregelventil.**

(30) Priorität : **29.01.80 DE 3003032**

(43) Veröffentlichungstag der Anmeldung :
**05.08.81 Patentblatt 81/31**

(45) Bekanntmachung des Hinweises auf die Patenterteilung : **16.11.83 Patentblatt 83/46**

(84) Benannte Vertragsstaaten :
**AT DE FR GB IT NL SE**

(56) Entgegenhaltungen :
**DE A 2 050 326**
**FR A 2 057 534**
**FR A 2 235 822**
**US A 3 250 288**
**US A 3 930 686**

(73) Patentinhaber : **WABCO Westinghouse Fahrzeugbremsen GmbH
Am Lindener Hafen 21 Postfach 91 12 80
D-3000 Hannover 91 (DE)**

(72) Erfinder : **Deike, Karl-Heinz
Feldstrasse 17
D-3017 Pattensen 5 (DE)**
Erfinder : **König, Heinz-Werner
Luisenstrasse 6
D-3013 Barsinghausen 8 (DE)**
Erfinder : **Menze, Wilfried
Goebelbastel 21
D-3257 Springe 1 (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

## Druckregelventil

Die Erfindung betrifft Druckregelventile in Druckluftanlagen, insbesondere für Fahrzeug-Bremsanlagen, gemäß dem Oberbegriff des Anspruchs 1.

Druckregelventile dienen im allgemeinen der selbsttätigen Regelung des Betriebsdruckes in Druckluftanlagen, indem diese das Durchströmen der von einem Luftpresser geförderten Druckluft so lange freigeben, bis eine am Regelventil eingestellte Druckhöhe in der Verbraucheranlage oder in Vorratsbehältern erreicht ist. Bei Erreichen des eingestellten Betriebsdruckes unterbricht das Druckregelventil den weiteren Druckaufbau in der Anlage und steuert die vom Luftpresser weiterhin erzeugte Druckluft ins Freie.

Ein Druckregelventil dieser Art ist unter der Bezeichnung Druckregler in den Konstruktionsunterlagen (Europa-Katalog) der Firma Wabco Fahrzeugbremsen GmbH in dem Blatt 975 300 900 3 der Kataloggruppe 6 beschrieben.

Der Steuerkolben dieses bekannten Druckreglers wird aus einer Membran gebildet, welche am Innendurchmesser zwischen der scheibenförmigen Ausbildung eines Ventilstößels und dem Federteller einer oberhalb der Membran angeordneten Druckfeder eingespannt ist.

Abgesehen davon, daß diese Form einer Membranbefestigung aufwendig ist und es häufig zu Undichtigkeiten zwischen der Membran und dem Ventilstößel kommt, wirken aufgrund der starren Verbindung zwischen der Membran und dem Stößel Querkräfte auf die Ventilstößelführung, so daß verhältnismäßig hohe Reibkräfte entstehen, welche die Schaltspanne beeinflussen und zu einem großen Verschleiß führen.

Der vorliegenden Erfindung liegt die Aufgabe zugrunde, ohne kostspieligen Aufwand ein Druckregelventil der eingangs genannten Art zu schaffen, dessen als Membran ausgebildeter Regelkolben die durch die Druckfeder entstehenden Querkräfte aufnimmt und bei dem der Ventilstößel unbelastet von diesen Kräften bleibt.

Diese Aufgabe wird durch die im Anspruch 1 aufgeführte Erfindung gelöst.

Sowohl durch die Ausgestaltung der den Regelkolben bildenden Membran mit einer lippenförmigen Ausbildung am Innendurchmesser der Membran und die dadurch ermöglichte befestigungslose Verbindung zwischen Ventilteller, Membran und Stößel, als auch durch gelenkige Verbindung zwischen Hohlstößel und Federteller, werden die durch die Druckfeder entstehenden Querkräfte nicht mehr auf die Stößelführung übertragen, sondern vorher vernichtet.

Bei der gleichzeitigen Ausbildung auch des Außendurchmessers der Membran in Lippenform, was dieser Membran die Form einer Topfmanschette gibt, kann auch auf eine Befestigung an deren Außendurchmesser verzichtet werden, so daß eine wesentliche vereinfachte Montage erzielt wurde.

Die Anwendung der Erfindung ist nicht auf speziell ausgebildete Druckregler beschränkt. Die Erfindung kann vielmehr insbesondere dort angewandt werden, wo der Betriebsdruck in Druckluftanlagen selbsttätig geregelt werden soll.

Vorteilhafte Weiterbildungen der Erfindung sind den Unteransprüchen zu entnehmen.

Die Erfindung soll nun anhand eines Ausführungsbeispiels, welches in Zeichnungen dargestellt ist, näher erläutert werden.

Es zeigen :

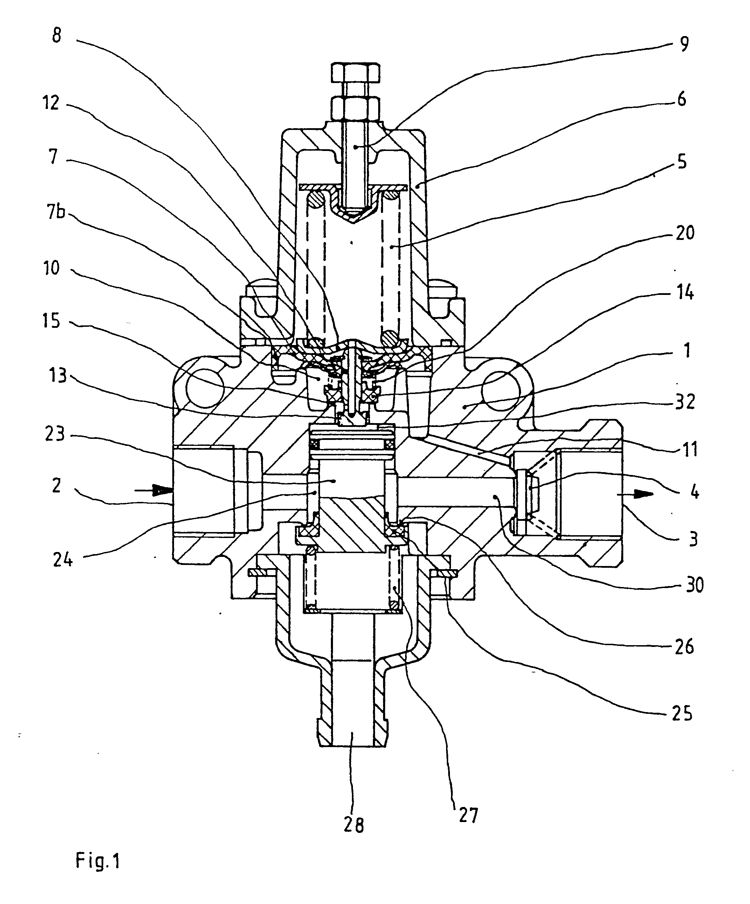

Figur 1 die schematische Darstellung eines Druckreglers

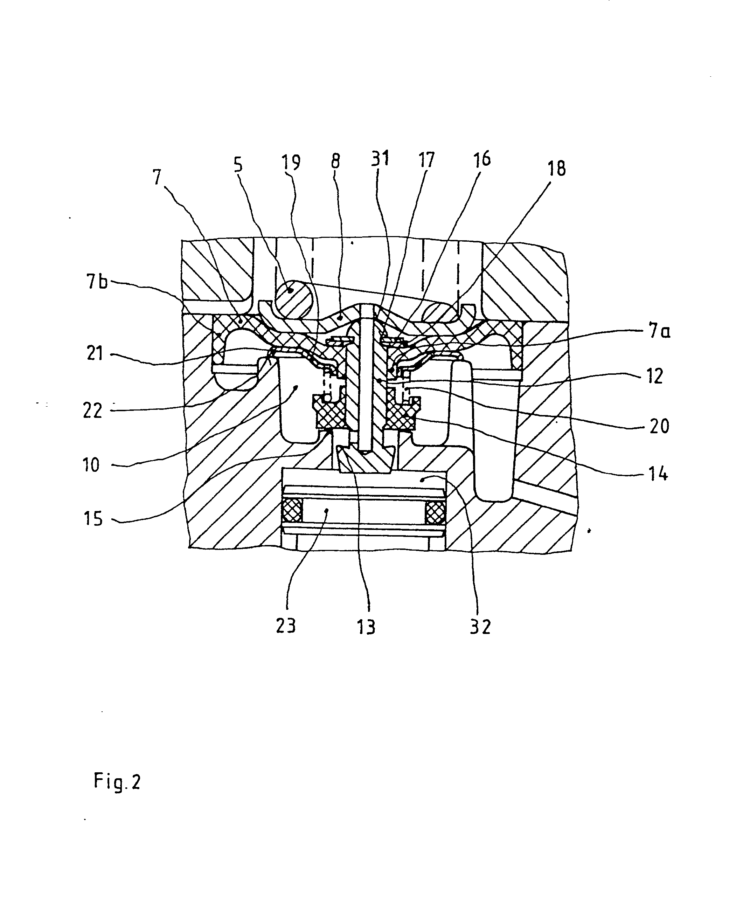

Figur 2 einen vergrößert dargestellten Ausschnitt von Federteller, Membran und Ventilstößel.

Das Ventilgehäuse 1 besitzt Anschlüsse für den Drucklufteingang (Anschluß 2) vom Drucklufterzeuger und für den Druckluftausgang (Anschluß 3) in den oder die Vorratsbehälter der Druckluftanlage, wobei im Stutzen des Anschlusses 3 ein in Strömungsrichtung öffnendes Rückschlagventil 4 angeordnet ist. Zwischen einem zur Aufnahme einer Regelfeder 5 dienenden Gehäusedeckel 6 und dem Ventilgehäuse 1 ist ein als Membran ausgebildeter Regelkolben 7 angeordnet, welcher über einen oberhalb der Membran 7 angeordneten ersten Federteller 8 unter der Spannung der Feder 5 steht, wobei diese Spannung mittels eines Gewindestiftes 9 einstellbar ist.

Der Innendurchmesser der Membran 7 ist als Lippe 7a und der Außendurchmesser als Lippe 7b ausgebildet, wobei die Durchmesser der inneren und äußeren Lippe so groß bemessen sind, daß die Lippen unter Vorspannung anliegen.

Unter der Membran 7 befindet sich eine Druckkammer 10, deren Beaufschlagung über eine mit dem Stutzen des Auslaßanschlusses 3 in Verbindung stehende Bohrung 11 erfolgt.

Ein die Membran 7, an deren Lippe 7a und die Kammer 10 zentral durchdringender Hohlstößel 12, bildet mit seinem als Ventilsitz 13 ausgebildeten Ende und einem Ventilkörper 14, der gleichfalls von dem Hohlstößel 12 durchdrungen wird, ein erstes Auslaßventil 13, 14. Der erwähnte Ventilkörper 14 bildet in Doppelfunktion mit einem gehäusefesten Ventilsitz 15 ein Einlaßventil 14, 15.

Zwecks Auslösung von Hubbewegungen des Hohlstößels 12 liegt die Membran 7 über eine aus einer Scheibe 18 und aus einem Sicherungsring 16 gebildeten Schulter an einem Anschlag 17 des Stößels 12 an.

Der Hohlstößel 12 wird mit seinem oberen kugelförmig ausgebildeten Ende 31 durch den Druck in der Druckkammer 10 gegen die Unterseite des ersten Federtellers 8 gedrückt.

Eine zwischen der Unterseite der Membran 7 bzw. einem unterhalb der Membran 7 angeordneten zweiten Ventilteller 19 und dem Ventilkörper 14 angeordnete Feder 20 hält den Ventilkörper 14 in schwacher Spannung gegen den Ventilsitz 15. Ein Ansatz 21 des Ventiltellers 19 und ein Gehäuseanschlag 22 verhindern ein zu starkes Durchbiegen der Membran 7 nach unten.

Ein im unteren Teil des Gehäuses geführter Kolben 23, dessen Druckbeaufschlagung über eine über das offene Einlaßventil 14, 15 mit der Kammer 10 verbundene Kammer 32 erfolgt, bildet mit einem am unteren Ende befestigten Ventilkörper 25 und einem gehäusefesten Ventilsitz 26 ein zweites Auslaßventil 25, 26. Dabei spannt eine unterhalb eines Kolbens 23 angeordnete und sich im Gehäuse abstützende Feder 27 den Kolben 23 in Schließstellung des zweiten Auslaßventils 25, 26 vor. Eine Gehäuseöffnung 28 dient bei Erreichen des Abschaltdruckes zur Entlüftung der vom Luftpresser geförderten Druckluft ins Freie. Die Bohrung des Hohlstößels 12 dient der Entlüftung der Kammer 32, wobei diese Entlüftung durch eine Bohrung des ersten Federtellers 8 in den Raum der Feder 5 erfolgt.

Die Funktion des Druckreglers ist wie folgt :

Die vom Luftpresser geförderte Druckluft strömt über den Anschluß 2 und einen Raum 24 in einen Raum 30. Nach Öffnen des Rückschlagventils 4 gelangt sie über eine vom Anschluß 3 abgehende Leitung zu den nicht dargestellten Luftbehältern sowie über die Bohrung 11 in die Kammer 10.

In der Kammer 10 baut sich nun ein Druck auf, der auf die Unterseite der Membran 7 wirkt. Sobald dieser Druck größer ist als die mit der Schraube 9 eingestellte Spannung der Druckfeder 4, wölbt sich die Membran 7 nach oben und nimmt dabei den Stößel 12 mit. Die dabei durch die Kraft der Feder 5 entstehenden Querkräfte werden nicht auf die Führung des Stößels 12 übertragen, sondern werden durch die Elastizität der befestigungslosen Verbindung zwischen dem Stößel 12 und der Membran 7 bzw. deren Lippe 7a und durch die gelenkige Verbindung zwischen dem Stößel 12 und dem ersten Federteller vernichtet. Die Mitnahme des Stößels 12 erfolgt durch den Reibwiderstand zwischen der Membranlippe 7a der mit Vorspannung eingebauten Membran 7 und über die Verbindung zwischen der Schulter 16, 18 und dem Anschlag 17 des Stößels 12.

Das erste Auslaßventil 13, 14 schließt und das Einlaßventil 14, 15 öffnet, so daß die in der Kammer 10 anstehende Druckluft in die Kammer 32 gelangt. Der sich hier aufbauende Druck bewegt den Kolben 23 gegen die Kraft der Feder 27 nach unten. Das zweite Auslaßventil 25, 26 öffnet und die vom Luftpresser geförderte Druckluft entweicht über die Entlüftung 28 ins Freie.

Durch den Druckabfall im Raum 30 schließt das Rückschlagventil 4, und der Druck in der Anlage bleibt gesichert.

Der Luftpresser arbeitet so lange im Leerlauf, bis der Druck in der Anlage unter den Einschaltdruck des Druckreglers abgesunken ist. Dabei baut sich der Druck in Kammer 10 unterhalb der Membran 7 ab. Daraufhin wird die Membran 7 mit dem Stößel 12 infolge Reibwiderstand und über den Anschlag 31 sowie den Federteller 8 durch die Kraft der Druckfeder 5 nach unten gedrückt. Das Einlaßventil 14, 15 schließt, das erste Auslaßventil 13, 14 öffnet und die Luft in der Kammer 32 entweicht über die Bohrungen des Hohlstößels 12 und des ersten Federtellers 8 in den Raum der Feder 5 bzw. ins Freie. Durch die Kraft der Feder wird der Kolben 23 nach oben gedrückt und das zweite Auslaßventil 25, 26 schließt. Die vom Luftpresser geförderte Druckluft strömt jetzt wieder in den Raum 30, öffnet das Rückschlagventil 4 und die Anlage wird wieder bis zum Abschaltdruck des Druckreglers aufgefüllt.

## Ansprüche

1. Druckregelventil in einer Druckluftanlage, insbesondere für Fahrzeug-Bremsanlagen, welche aus einem Drucklufterzeuger und aus Druckluftverbrauchern besteht, welches folgende Merkmale umfaßt :

    a) das Druckregelventil besitzt einen aus einer ringförmigen Membran (7) bestehenden Regelkolben ;

    b) die Membran (7) ist vom Druck einer unterhalb der Membran (7) angeordneten Kammer (10) beaufschlagt ;

    c) eine Ringfeder (5) ist oberhalb der Membran (7) derart angeordnet, daß deren über einen ersten Federteller (8) wirkende Kraft dem Druck in der Kammer (10) entgegenwirkt, gekennzeichnet durch folgende Merkmale :

    d) die Membran (7) ist an ihrem Innendurchmesser mit einer Ringlippe (7a) versehen ;

    e) die Ringlippe (7a) liegt unter Vorspannung an einem den Innendurchmesser der Membran (7) durchdringenden Hohlstößel (12) an ;

    f) der Hohlstößel (12) umfaßt eine Schulter (16, 18), gegen welche die Membran (7) in ihrem Mittelbereich derart anliegt, daß sein eines kugelförmig ausgebildetes Ende (31) durch den Druck in der Kammer (10) an den ersten Federteller (8) angedrückt gehalten wird.

2. Druckregelventil nach Anspruch 1, gekennzeichnet durch folgendes Merkmal : Die Membran (7) ist an ihrem Außendurchmesser mit einer Lippe (7b) versehen.

3. Druckregelventil nach Ansprüchen 1 und 2, gekennzeichnet durch folgendes Merkmal : Ein unterhalb der Membran (7) angeordneter zweiter Federteller (19) ist mit einem Ansatz (21) versehen, der mit einem Gehäuseanschlag (22) so zusammenwirkt, daß der Abwärtshub der Membran (7) begrenzt ist.

## Claims

1. Pressure control valve in a pneumatic system, especially for vehicle brake systems, which comprises a compressed air producer and compressed air consumers, and has the following features :

a) the pressure control valve has a control piston comprising an annular membrane (7) ;

b) the membrane (7) is subjected to the pressure of a chamber (10) located underneath the membrane (7) ;

c) an annular spring (5) is located above the membrane (7) in such a manner that its force, which acts *via* a first spring plate (8), opposes the pressure in the chamber (10), characterised by the following features :

d) the internal diameter of the membrane (7) is provided with an annular lip (7a) ;

e) the annular lip (7a) lies, under prestress, against a hollow tappet (12) which penetrates the internal diameter of the membrane (7) ;

f) the hollow tappet (12) comprises a shoulder (16, 18), against which the middle area of the membrane (7) lies in such a manner that the spherical end (31) of the tappet is kept pressed against the first spring plate (8) by the pressure in the chamber (10).

2. Pressure control valve according to claim 1, characterised by the following feature : the external diameter of the membrane (7) is provided with a lip (7b).

3. Pressure control valve according to claims 1 and 2, characterised by the following feature : a second spring plate (19) located underneath the membrane (7), is provided with a projection (21) which cooperates with a housing stop (22) in such a manner that the downward stroke of the membrane (7) is limited.

**Revendications**

1. Vanne de régulation de pression dans un équipement pneumatique, destiné en particulier à des équipements de freinage de véhicule automobile et comprenant un générateur et des récepteurs d'air comprimé, présentant les particularités suivantes :

a) la vanne de régulation de pression comporte un piston régulateur constitué par une membrane annulaire (7) ;

b) la membrane (7) est chargée par la pression régnant dans une chambre (10) située au-dessous d'elle ;

c) un ressort à boudin (5) est disposé au-dessus de la membrane (7), de façon que la force s'exerçant par l'intermédiaire d'une première coupelle (8) s'oppose à la pression dans la chambre (10), et caractérisé en ce que :

d) la membrane (7) présente une lèvre annulaire (7a) sur son diamètre intérieur ;

e) la lèvre annulaire (7a) est appliquée sous précontrainte sur un poussoir creux (12) traversant le diamètre intérieur de la membrane (7) ;

f) le poussoir creux (12) comporte un épaulement (16, 18), sur lequel la partie médiane de la membrane (7) s'applique de façon que son extrémité sphérique (31) soit maintenue et appliquée sur la première coupelle (8) de ressort par la pression régnant dans la chambre (10).

2. Vanne de régulation de pression selon revendication 1, caractérisée en ce que la membrane (7) présente une lèvre (7b) sur son diamètre extérieur.

3. Vanne de régulation de pression selon revendication 1 et 2, caractérisée en ce qu'une seconde coupelle (19) de ressort, disposée au-dessous de la membrane (7), présente une saillie (21) qui interagit avec une butée (22) du corps de façon à limiter la course de levée de la membrane (7).

Fig.1

Fig. 2